(19) Europäisches Patentamt

European Patent Office

Office européen des brevets

(11) **EP 1 172 333 B1**

(12) **EUROPÄISCHE PATENTSCHRIFT**

(45) Veröffentlichungstag und Bekanntmachung des Hinweises auf die Patenterteilung:
**10.03.2004   Patentblatt 2004/11**

(51) Int Cl.$^7$: **C01C 3/02**

(21) Anmeldenummer: **01116151.0**

(22) Anmeldetag: **04.07.2001**

(54) **Verfahren zur Herstellung von Cyanwasserstoff**

Process for the preparation of hydrogen cyanide

Procédé de production d'acide cyanhydrique

(84) Benannte Vertragsstaaten:
**AT BE CH CY DE DK ES FI FR GB GR IE IT LI LU MC NL PT SE TR**

(30) Priorität: **13.07.2000   DE 10034194**

(43) Veröffentlichungstag der Anmeldung:
**16.01.2002   Patentblatt 2002/03**

(73) Patentinhaber: **Röhm GmbH & Co. KG**
**64293 Darmstadt (DE)**

(72) Erfinder:
• **Schäfer, Thomas**
**64572 Büttelborn (DE)**
• **Siegert, Hermann, Dr.**
**64342 Seeheim-Jugenheim (DE)**

(56) Entgegenhaltungen:
WO-A-97/09273      GB-A- 1 120 401
US-A- 3 379 500      US-A- 5 882 618

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

**Stand der Technik**

Die Synthese von Cyanwasserstoff (Blausäure) nach dem Andrussow-Verfahren wird in Ullmann's Encyclopedia of Industrial Chemistry, Volume 8, VCH Verlagsgesellschaft, Weinheim 1987, Seite 161-162 beschrieben. Das Eduktgasgemisch, bestehend aus Methan bzw. einem methanhaltigen Erdgasstrom, Ammoniak und Sauerstoff, wird in einem Reaktor über Katalysatornetze geleitet und bei Temperaturen von ca. 1000 °C umgesetzt. Der notwendige Sauerstoff wird üblicherweise in Form von Luft eingesetzt. Die Katalysatornetze bestehen aus Platin oder Platinlegierungen. Die Zusammensetzung des Eduktgasgemisches entspricht etwa der Stöchiometrie der exotherm verlaufenden Bruttoreaktionsgleichung

$$CH_4 + NH_3 + 3/2\ O_2 \rightarrow HCN + 3\ H_2O \qquad dHr = -473,9\ kJ.$$

Das abströmende Reaktionsgas enthält das Produkt HCN, nicht umgesetztes $NH_3$ und $CH_4$ sowie die wesentlichen Nebenprodukte CO, $H_2$, $H_2O$, $CO_2$ und einem großen Anteil $N_2$.

Das Reaktionsgas wird in einem Abhitzekessel schnell auf ca. 150 - 200 °C abgekühlt und passiert anschließend eine Waschkolonne, in der mit verdünnter Schwefelsäure das nicht umgesetzte $NH_3$ herausgewaschen wird und Teile des Wasserdampfes kondensiert werden. Bekannt ist auch die Absorption von $NH_3$ mit Natriumhydrogenphosphat-Lösung und anschließendes Recycling des Ammoniaks. In einer nachfolgenden Absorptionskolonne wird HCN in kaltem Wasser absorbiert und in einer nachgeschalteten Rektifikation mit einer Reinheit größer 99,5 Ma% dargestellt. Das im Sumpf der Kolonne anfallende, HCN-haltige Wasser wird abgekühlt und zur HCN-Absorptionskolonne zurückgeführt.

Ein breites Spektrum möglicher Ausführungen des Andrussow-Verfahrens ist in DE 549 055 beschrieben. Wie beispielhaft angegeben, arbeitet man mit einem Katalysator, der aus mehreren hintereinander angeordneten feinmaschigen Netzen aus Pt mit 10% Rhodium besteht, bei Temperaturen von ca. 980 - 1050 °C. Die HCN-Ausbeute, bezogen auf eingesetztes $NH_3$, beträgt 66,1 %.

Eine Methode zur Maximierung der HCN-Ausbeute durch optimale Einstellung des Luft/Erdgas- und des Luft/Ammoniak-Verhältnisses wird in US-PS 4,128,622 beschrieben.

Neben der üblichen Betriebsweise mit Luft als Sauerstofflieferant wird in verschiedenen Schriften die Anreicherung der Luft mit Sauerstoff beschrieben. In Tabelle 1 sind einige Patentschriften mit den darin genannten Betriebsbedingungen aufgelistet.

Tabelle 1

| Zusammenstellung verschiedener Patentansprüche zur Sauerstoffanreicherung | | | | |
|---|---|---|---|---|
| entspricht : | **DE 1 283 209, 1968 Società Edison** | **DE-AS 1 288 575, 1968 Società Edison** | **PCT WO 97/09273, 1997 ICI** | **US 5 882 618, 1999, Air Liquide** |
| | Pat 660 4519 NL Pat 679 440 BE *US 3,379,500* | Pat 660 4697 NL Pat 679 529 BE | spezieller Reaktor | |
| Eduktgasvorwärmung | -- | 200 - 400 °C 300 - 380 °C | 200 - 400 °C weitere Temperaturangaben für einzelne Eduktgasströme | |
| Netz-Temp. | 1100 - 1200 °C | 1100 - 1200 °C | | 1100 +- 50 °C |
| molares Verhältnis $(O_2+N_2)\ /\ CH_4$ | 6,5 - 1,55 *4,55 - 2,80* | 6,0 - 1,6 4,5 - 2,6 | | Verhältnisse als Relation zur Fahrweise mit Luft angegeben |
| $(O_2+N_2)\ /\ NH_3$ | 6,8 - 2,0 *4,8 - 3,65* | 6,0 - 2,0 4,5-3,0 | | |
| $CH_4\ /\ NH_3$ | *1,4-1,05* 1,3 - 1,1 | 1,3 - 1,0 1,25 - 1,05 | 1,0 - 1,5 | |
| $O_2\ /\ (O_2+N_2)$ | 0,245 - 0,4 *0,27 - 0,317* | 0,245 - 0,35 0,25 - 0,30 | 0,3 - 1,0 | |

US-PS 5,882,618 beschreibt die Blausäure-Herstellung nach dem Andrussow-Verfahren unter Verwendung von mit Sauerstoff angereicherter Luft.

Um die dabei auftretenden Probleme, wie die Annäherung an die Explosionsgrenzen des Gemisches aus $NH_3$, $CH_4$ und mit Sauerstoff angereicherter Luft und die erhöhte Temperatur des Katalysatornetzes zu umgehen, die zu Ausbeuteverlusten und verkürzten Katalysatorstandzeiten führen, werden folgende Maßnahmen vorgeschlagen:

In einem ersten Verfahrensschritt wird mit Luft als Sauerstoffquelle die Anlage angefahren. Während dieses ersten Verfahrensschritts stellt sich eine bestimmte Temperatur des Katalysatorgitters ein.

In einem zweiten Verfahrensschritt wird dann Sauerstoff zudosiert und gleichzeitig der Gehalt an Ammoniak und Methan so eingestellt, dass das Gemisch oberhalb der oberen Explosionsgrenze liegt und die Temperatur am Katalysator im Bereich von 50 K der im Schritt 1 bestimmten Referenztemperatur entspricht. Die Temperatur des Katalysatornetzes beträgt ca. 1100 °C bis 1200 °C.

Durch diese Vorgehensweise erreicht man eine sichere Fahrweise der Anlage beim Betrieb mit sauerstoffangereicherter Luft.

WO 97/09273 löst die Nachteile einer großen $N_2$-Verdünnung der Reaktionsgase durch Verwendung vorerhitzter, detonationsfähiger Gemische aus Methan, Ammoniak und mit Sauerstoff angereicherter Luft bzw. reinem Sauerstoff.

**Nachteile des Standes der Technik**

Die bisher beschriebene Sauerstoffanreicherung des Eduktgases der HCN-Synthese nach Andrussow hat folgende Nachteile :

- Annäherung an die obere Explosionsgrenze der Eduktgasmischung (Gefahr von Explosionen, Verpuffungen, lokale Temperaturspitzen und hierdurch Beschädigung des Katalysatornetzes)
- niedrige Ausbeute bezogen auf $NH_3$
- höhere Katalysatortemperatur und schnellere Desaktivierung
- max. $O_2$-Anreicherung in den üblichen Andrussow-Reaktoren beträgt bis 40% $O_2$ in Luft
- hohe Investitions- und Wartungskosten bei Einsatz spezieller Reaktoren (WO 97/ 09273.)

**Aufgabe**

Die Vorteile der Anreicherung des Eduktgasstromes mit Sauerstoff sind im wesentlichen:

- Erhöhung der Produktionsleistung (kg HCN / h) in bestehenden Anlagen durch Reduzierung des Inertgasanteils
- Verringerung des Energiebedarfes bei der HCN-Absorption und Rektifikation

Durch Einstellung von Bedingungen und Konzentrationsverhältnissen im Eduktgas entsprechend der in den Ansprüchen beschriebenen Lösung können die Vorteile einer Sauerstoffanreicherung realisiert werden, ohne die beschriebenen Nachteile in Kauf nehmen zu müssen.

Folgende Vorteile sollen mit der erfindungsgemäßen Verfahrensverbesserung erreicht werden:

- Anreicherung des Eduktgases mit Sauerstoff bis zu einem Anreicherungsgrad von $O_2/(O_2+N_2) = 1{,}0$. Verbunden mit der Anreicherung ist eine Verringerung des Inertgasstromes bzw. eine Erhöhung der HCN-Konzentration im Reaktionsgas und somit eine Steigerung der Produktionsleistung bestehender Anlagen bei gleichzeitiger Reduzierung des Energiebedarfs pro t produzierter HCN (Dampf, Kühlleistung).
- Verbesserung der HCN-Ausbeute, bezogen auf eingesetztes $NH_3$
- Realisierung einer hohen Katalysatorleistung (HCN-Produktionsmenge pro kg Katalysatornetz)
- sicherer Betrieb des Reaktors mit einem nicht zündfähigen Eduktgasgemisch

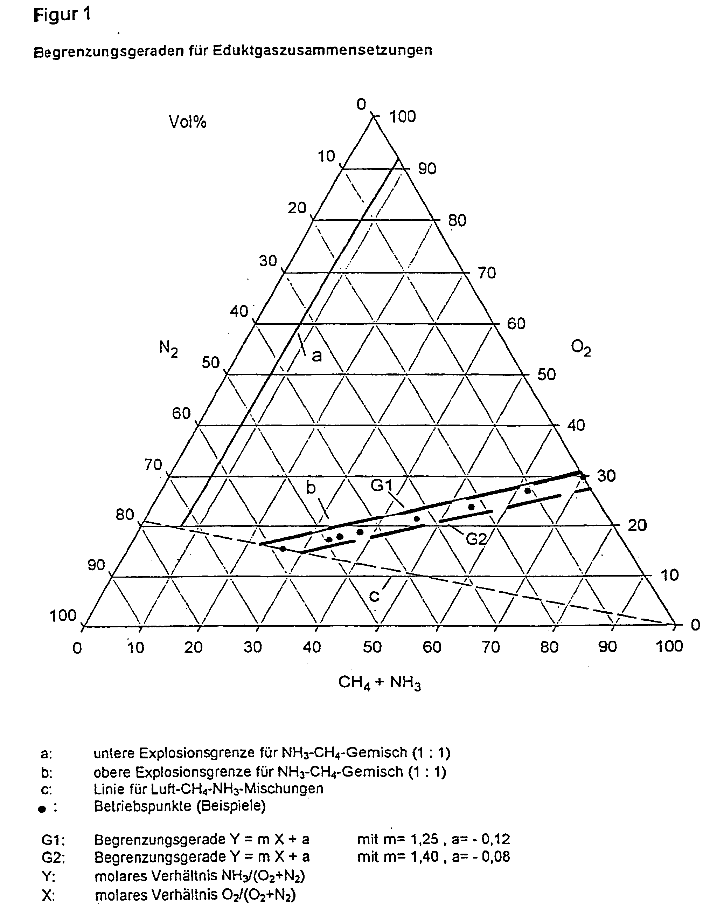

Ein weiterer Vorteil des erfindungsgemäßen Verfahrens ist es, dass das Verfahren in bestehenden Anlagen zur Blausäureherstellung durchgeführt werden kann. Es sind keine kostenträchtigen Umbauten erforderlich (Ullmann's Encyclopedia of Industrial Chemistry 5. Edition, Vol. A8, p. 159 ff. (1987)). Da außerhalb der Detonationsgrenzen des Gemisches gearbeitet wird, sind aufwendige Reaktoren, wie beispielsweise in WO 97/09273, Figur 1, beschrieben, nicht erforderlich. Weiter entfällt die Notwendigkeit, einen weiten Sicherheitsabstand von der Selbstentzündungstemperatur der Mischung (min. 50 °C) zu halten, wie in WO 97/09273 (S. 1 Zeile 35 - S. 2 Zeile 2) beschrieben. Damit erreicht man auch in bestehenden Anlagen zur Blausäureherstellung eine verbesserte Raum-Zeit-Ausbeute.

**Lösung der Aufgabe**

Mit der Durchführung der nachfolgend genannten Maßnahmen werden die beschriebenen Vorteile erzielt. Insbesonders wird neben den Vorteilen der $O_2$-Anreicherung überraschenderweise auch eine höhere HCN-Ausbeute bezogen auf das eingesetzte $NH_3$ erzielt, wenn man das molare Verhältnis $O_2/(O_2+N_2)$, das molare Verhältnis $CH_4/NH_3$ und das molare Verhältnis $NH_3/(N_2+O_2)$ wie beansprucht einstellt.

***Maßnahmen im einzelnen:***

Bei der Beschreibung der Maßnahmen wird lediglich Methan ($CH_4$) genannt. Unter Methan im Sinne der Erfindung wird ein Erdgasgemisch mit mindestens 88 Vol % Methan verstanden.

I. Anreicherung der Oxidationsluft mit Sauerstoff.
Der Luftvolumenstrom wird mit reinem Sauerstoff oder einem Stickstoff-Sauerstoff-Gemisch gemischt. Die mit Sauerstoff angereicherte Oxidationsluft sollte ein molares Verhältnis von

$$O_2/(O_2+N_2) = 0,25 - 0,40$$

besitzen. Bei Einhaltung ausreichender Dosiergenauigkeiten kann die Anreicherung bis zum vollständigen Ersatz des Luftvolumenstromes mit reinem Sauerstoff erfolgen (molares Verhältnis $O_2/(O_2+N_2) = 0,25 - 1,0$).

II. Einstellung des molaren Verhältnisses $CH_4/NH_3$ im Eduktgasgemisch im Bereich

$$CH_4/NH_3 = 0,95 - 1,05$$

bevorzugter Bereich

$$CH_4/NH_3 = 0,98 - 1,02$$

III. Einstellung des molaren Verhältnisses $NH_3/(O_2+N_2)$ im Eduktgasgemisch
Die Einstellung des molaren Verhältnisses $NH_3/(O_2+N_2)$ erfolgt in Abhängigkeit vom molaren Verhältnis $O_2/(O_2+N_2)$. Die Zusammensetzung des Eduktgasgemisches liegt dabei in einem Konzentrationsband, das von den beiden Geraden
$Y = 1,25\,X - 0,12$ und $Y = 1,40\,X - 0,08$ begrenzt wird (s. Figur 1).
Hierbei gilt :

$Y$ = molares Verhältnis $NH_3/(O_2+N_2)$
$X$ = molares Verhältnis $O_2/(O_2+N_2)$

Ein vorteilhaftes molares Verhältnis $Y$ folgt abhängig vom molarem Verhältnis $X$ durch Einsetzen der Parameter $m$ und $a$ in die Geradengleichung $Y = mX - a$ , wobei die Parameter in den folgenden Bereichen liegen:

$m = 1,25 - 1,40$ und
$a = 0,05 - 0,14$

besonders Vorteilhaft sind die Bereiche :

$m = 1,25 - 1,33$ und
$a = 0,07 - 0,11$

IV. Limitierung der Vorwärmung der Eduktgasmischung auf maximal 150°C.

**Beispiele**

Nachfolgend beschriebene Beispiele wurden in einer Laborapparatur, bestehend aus einer Gasdosierung mit thermischen Massedurchflussreglern für die eingesetzten Eduktgase (Methan, Ammoniak, Luft, Sauerstoff), einer elektrischen Heizung zur Vorwärmung der Eduktgase, einem Reaktorteil (Innendurchmesser $d_i$: 25 mm) mit 6 Lagen eines Pt/Rh10 Katalysatornetzes und einem nachgeschalteten HCN-Wäscher zur Neutralisation der gebildeten HCN mit NaOH-Lösung durchgeführt.

Das Reaktionsgas wurde online in einem GC analysiert. Zur Bilanzierung der gebildeten HCN-Menge wurde zusätzlich der CN Gehalt im Austrag des HCN-Wäschers durch argentometrische Titration bestimmt.

Ausgehend von einer Betriebsweise entsprechend den bekannten Betriebsbedingungen mit Luft als Sauerstoffquelle wurde in einer Versuchsreihe zunehmend Luftsauerstoff durch Reinsauerstoff ersetzt und gleichzeitig bei konstantem $CH_4/NH_3$-Verhältnis das molare $O_2/NH_3$-Verhältnis reduziert. Alle Versuche wurden mit einem konstanten Eduktgasvolumenstrom von 24 Nl/Min durchgeführt. Tabelle 2 zeigt eine Auswahl repräsentativer Ergebnisse.

Tab. 2

**Versuchsergebnisse zur $O_2$-Anreicherung im Eduktgas**
($d_i$ : 25 mm, Eduktgasvolumenstrom $V'_F$ : 24 Nl/min, Eduktgastemp. $T_F$ : 60 °C, )

| Nr. | molares [1] Verhältnis $O_2 / (O_2 + N_2)$ | molares Verhältnis $NH_3 / (O_2 + N_2)$ | Parameter in Y = m X - a | | Netz-temp. $T_N$ | HCN-Konz. im Reaktions-gas | spez. Reaktor-Leistung $L_{spez}$ | Ausbeute $A_{HCN}$ |
|---|---|---|---|---|---|---|---|---|
| | **X** | **Y** | **a** | **m** | °C | %Vol% | kg HCN / h/ $m^2$ | % |
| 1 | **0,21 [2]** | **0,182** | 0,080 | 1,25 | 994 | **7,6** | **303** | **62,9** |
| 2 | **0,259** | **0,255** | 0,074 | 1,27 | 1011 | **9,1** | **380** | **62,4** |
| 3 | **0,300** | **0,307** | 0,083 | 1,30 | 1022 | **10,1** | **442** | **64,5** |
| 4 | **0,393** | **0,426** | 0,080 | 1,29 | 1032 | **12,0** | **542** | **65,6** |
| 5 | **0,516** | **0,590** | 0,097 | 1,33 | 1034 | **13,7** | **650** | **66,3** |
| 6 | **0,714** | **0,826** | 0,082 | 1,27 | 1010 | **14,6** | **750** | **66,8** |
| 7 | **1,00 [3]** | **1,185** | 0,075 | 1,26 | defekt | **16,7** | **863** | **68,0** |

[1]: $O_2$ -Anteil im Sauerstoff-Luft-Gemisch [2]: nur Luftsauerstoff [3]: Fahrweise mit reinem Sauerstoff ohne Luft

Bei konstantem Gasvolumenstrom steigt die spezifische Reaktorleistung (Auf die Querschnittsfläche des Katalysatornetzes bezogene HCN-Produktionsmenge in kg / (h*$m^2$)) von ca. 300 kg HCN/h/$m^2$ (Oxidationsmittel nur Luftsauerstoff) auf ca. 860 kg HCN /h/$m^2$ bei einer Fahrweise mit reinem Sauerstoff als Oxidationsmittel. Die HCN-Ausbeute bezogen auf eingesetztes Ammoniak $A_{HCN,NH3}$ verbessert sich von 63% auf 68%. Die HCN-Konzentration im Reaktionsgas steigt mit Abnahme des Stickstoffanteils im Eduktgas von 7,6 Vol% auf 16,7 Vol%.

**Patentansprüche**

1. Verfahren zur Herstellung von Cyanwasserstoff nach dem Andrussow-Verfahren durch Umsetzung von Methan bzw. methanhaltigem Erdgas, Ammoniak und von mit Sauerstoff angereicherte Luft oder mit Sauerstoff, an einem Katalysator bestehend aus Platin oder Platinlegierungen,
   **dadurch gekennzeichnet, daß**
   das molare Verhältnis der Eduktgaskomponenten Sauerstoff und Stickstoff die Beziehung

$$\frac{[O_2]}{[O_2 + N_2]} = 0,25 - 1,0 \ (Vol/Vol)$$

erfüllt und daß das molare Verhältnis von Erdgas und Ammoniak

$$\frac{[CH_4]}{[NH_3]} = 0,95 - 1,05$$

beträgt,
**dadurch gekennzeichnet,**
**daß** das molare Verhältnis von $NH_3$ zu der Summe aus $O_2$ und $N_2$ folgender Beziehung gehorcht

$$Y = m \cdot X - a,$$

wobei gilt:

$$Y = \frac{[NH_3]}{[O_2 + N_2]}$$

$$X = \frac{[O_2]}{[O_2 + N_2]}$$

m = 1,25 - 1,40
a = 0,05 - 0,14

2. Verfahren nach Anspruch 1 bis , wobei gilt
m = 1,25 - 1,33
a = 0,07 - 0,11

3. Verfahren nach Anspruch 1 bis 2,
**dadurch gekennzeichnet,**
**daß** das Eduktgasgemisch auf höchstens 150 °C vorgewärmt wird

4. Verfahren nach Anspruch 1 bis 3
**dadurch gekennzeichnet,**
**daß** die Volumenströme für NH3 und CH4 bzw. Erdgas abhängig vom molaren Verhältnis X = O2/(N2+O2) nach den, in den Ansprüchen 1 bis 4 angegebenen Formeln und Parametern unter Einsatz einer Gasdosierung mit thermischen Massedurchglussreglern für die eingesetzten Eduktgase berechnet und geregelt werden.

**Claims**

1. Process for preparing hydrogen cyanide by the Andrussov method by reacting methane or methane-containing natural gas, ammonia and oxygen-enriched air or oxygen, on a catalyst consisting of platinum or platinum alloys, **characterised in that** the molar ratio of the educt gas components oxygen and nitrogen satisfies the equation

$$\frac{[O_2]}{[O_2 + N_2]} = 0.25 - 1.0 \ (Vol/Vol)$$

and the molar ratio of natural gas and ammonia is

$$\frac{[CH_4]}{[NH_3]} = 0.95 - 1.05 \ ,$$

**characterised in that** the molar ratio of $NH_3$ to the sum of $O_2$ and $N_2$ satisfies the following equation:

$$Y = m.X - a,$$

wherein:

$$Y = \frac{[NH_3]}{[O_2 + N_2]}$$

$$X = \frac{[O_2]}{[O_2 + N_2]}$$

$$m = 1.25 - 1.40$$

$$a = 0.05 - 0.14$$

2. Process according to claim 1, wherein

$$m = 1.25 - 1.33$$

$$a = 0.07 - 0.11$$

3. Process according to claim 1 to 2, **characterised in that** the educt gas mixture is preheated to a maximum of 150°C.

4. Process according to claims 1 to 3, **characterised in that** the volume flows for $NH_3$ and $CH_4$ or natural gas are calculated and regulated as a function of the molar ratio $X = O_2/(N_2 + O_2)$ according to the formulae and parameters specified in claims 1 to 4, using gas metering with thermal mass throughflow regulators for the educt gases used.

**Revendications**

1. Procédé de production d'acide cyanhydrique selon le procédé Andrussow par mise en réaction du méthane ou de gaz naturel contenant du méthane, d'ammoniac et d'air enrichi avec de l'oxygène, ou d'oxygène, sur un catalyseur constitué par du platine ou d'alliages de platine,
**caractérisé en ce que**
le rapport molaire des composants des gaz d'éduit oxygène et azote satisfait la relation

$$\frac{[O_2]}{[O_2 + N_2]} = 0,25 - 1,0 \ (Vol / Vol)$$

et le rapport molaire du gaz naturel et de l'ammoniac est

$$\frac{[CH_4]}{[NH_3]} = 0,95 - 1,05$$

et le rapport molaire de $NH_3$ à la somme de $O_2$ et de $N_2$ répond à la relation suivante :

$$Y = m \, X - a,$$

dans laquelle on a :

$$Y = \frac{[NH_3]}{[O_2 + N_2]}$$

$$X = \frac{[O_2]}{[O_2 + N_2]}$$

$$m = 1{,}25 - 1{,}40$$

$$a = 0{,}05 - 0{,}14.$$

2. Procédé selon la revendication 1,
   dans lequel on a :

$$m = 1{,}25 - 1{,}33$$

$$a = 0{,}07 - 0{,}11$$

3. procédé selon l'une quelconque des revendications 1 ou 2,
   **caractérisé en ce que**
   le mélange de gaz d'éduits est préchauffé à au maximum 150°C.

4. Procédé selon l'une quelconque des revendications 1 à 3,
   **caractérisé en ce que**
   les courants volumiques pour $NH_3$ et $CH_4$ ou le gaz naturel en fonction du rapport molaire $X = O_2/(N_2 = O_2)$ selon les formules et les paramètres indiqués dans les revendications 1 à 3 sont calculés et contrôlés en utilisant un dosage de gaz avec des régulateurs thermiques de débit de masse pour les gaz d'éduit mis en oeuvre.

## Figur 1

Begrenzungsgeraden für Eduktgaszusammensetzungen

| | |
|---|---|
| a: | untere Explosionsgrenze für $NH_3$-$CH_4$-Gemisch (1 : 1) |
| b: | obere Explosionsgrenze für $NH_3$-$CH_4$-Gemisch (1 : 1) |
| c: | Linie für Luft-$CH_4$-$NH_3$-Mischungen |
| ● : | Betriebspunkte (Beispiele) |

| | | |
|---|---|---|
| G1: | Begrenzungsgerade Y = m X + a | mit m= 1,25 , a= - 0,12 |
| G2: | Begrenzungsgerade Y = m X + a | mit m= 1,40 , a= - 0,08 |
| Y: | molares Verhältnis $NH_3$/($O_2$+$N_2$) | |
| X: | molares Verhältnis $O_2$/($O_2$+$N_2$) | |